# FASCICULE DE BREVET EUROPEEN

(11) **EP 1 383 139 B1**
(45) Date de publication et mention de la délivrance du brevet: **25.04.2007**
(21) Numéro de dépôt: 03356110.1
(22) Date de dépôt: 11.07.2003
(51) Int. Cl.: H01B 3/42, C09D 167/06, C09D 163/00

(54) **Réseaux interpénétrés de polymère epoxy-polyesters**
Epoxy-Polyesterpolymer-Interpenetrierendes Netzwerk
Epoxy-polyesterpolymer-interpenetrating network

(30) Priorité: 15.07.2002 FR 0208883
(43) Date de publication de la demande: 21.01.2004
(73) Titulaire: Von Roll Isola France SA, 69330 Meyzieu (FR)
(72) Inventeur: Dubuisson, Alain, 69008 Lyon (FR); Dumond, Stephan, 69970 Chaponnay (FR); Schulz, Marcus, 4104 Oberwil/BL (CH); Zabinski, Raymond, Albany 12209 New York (US)
(74) Mandataire: Sarlin, Laure V.

(56) Documents cités:
- EP-A- 0 703 258
- DE-A- 19 903 725
- US-A- 3 312 644
- US-A- 4 309 519
- DATABASE WPI Section Ch, Week 199445 Derwent Publications Ltd., London, GB; Class A23, AN 1994-363635 XP002235557 & JP 06 287286 A (HITACHI CHEM CO LTD) 11 octobre 1994 (1994-10-11)

## Description

La présente invention concerne le domaine technique de l'isolation électrique. En particulier, elle a pour objet des compositions liquides pour la préparation de vernis, leur procédé de préparation, les vernis thermodurs obtenus à partir desdites compositions, ainsi qu'un procédé de préparation de tels vernis et leur utilisation pour l'isolation électrique.

L'art antérieur propose différentes solutions de vernis utilisables dans le domaine de l'isolation électrique. Par exemple, il est connu d'utiliser des vernis obtenus à partir de polyesters insaturés contenant du styrène, du vinyltoluène ou un autre diluant réactif, conférant au polyester une faible viscosité, une grande réactivité à chaud, ainsi qu'une bonne stabilité à température ambiante. De tels vernis présentent certes d'excellentes propriétés d'isolation électrique, y compris à des températures de 200°C pour les plus performants, mais, la polymérisation à chaud, nécessaire pour la formation du vernis entraîne l'émission de composés organiques volatils, entraînant des pertes de poids de l'ordre de 15 à 25 %, ce qui constitue un inconvénient majeur. Il a donc été proposé d'utiliser des diluants à haut point éclair, comme le phtalate de diallyle, ce qui permet de diminuer l'émission de composés organiques volatils (COV) pour atteindre des pertes de poids de l'ordre de 8 à 10 %. Cependant, ces solutions demeurent insuffisantes pour réduire les rejets dans l'atmosphère afin de répondre aux normes environnementales de plus en plus exigentes.

Pour tenter de répondre à ces exigences, la demande de brevet publiée sous le numéro WO 97/25 362 propose d'utiliser des résines polyesters saturés ou non, éventuellement sous forme de mélange, ces résines étant exemptes de monomères réactifs. Néanmoins, les vernis obtenus à partir de telles résines présentent des performances mécaniques et adhésives réduites limitant leurs usages. Par exemple, l'utilisation de telles résines entraîne un retrait important lors de la polymérisation ce qui influence considérablement les propriétés mécaniques en entraînant des fissures et qui peut nuire aux propriétés d'isolation électrique.

L'art antérieur propose également d'utiliser des vernis isolants à base d'époxyde, ce qui permet de respecter les exigences liées à l'environnement, dans la mesure où l'emploi de diluants à bas point éclair n'est pas nécessaire. Les propriétés mécaniques de tels vernis sont reconnues comme supérieures à celles des polyesters, mais les résines époxydes présentent l'inconvénient d'être faiblement réactives à chaud. L'ajout d'accélérateurs est nécessaire pour améliorer cette réactivité et ainsi diminuer le temps de polymérisation mais entraîne le plus souvent une diminution de la stabilité à température ambiante.

Afin de tenter d'obtenir les avantages liés, d'une part, aux résines de type polyesters et, d'autre part, aux résines de type époxydes, il a été proposé d'utiliser ces types de résine sous forme de mélange ou « blends » ou comme le propose la demande de brevet publiée sous le numéro WO 99/10 405 sous forme de copolymères. La demande de brevet WO 99/10 405 décrit l'utilisation d'un polyester riche en fonctions acides résiduelles pour faire réagir ces fonctions acides avec les fonctions époxydes d'une résine époxyde afin de former un copolymère. Les viscosités des résines mises en oeuvre étant encore trop élevées, tous les exemples de la présente demande de brevet utilisent des diluants réactifs tels que le vinyltoluène, entrainant à nouveau des rejets atmosphériques trop importants.

Dans ce contexte, il existe donc un besoin pour des compositions liquides utilisables pour la préparation de vernis, lesdits vernis devant présenter de bonnes propriétés mécaniques et d'adhésion, ainsi que des propriétés d'isolation électrique .

Cette composition doit également présenter des propriétés de polymérisation satisfaisante, en terme de réactivité et de temps de polymérisation, ainsi qu'une bonne stabilité à température ambiante.

Un autre objectif que vise à résoudre la présente invention est de proposer une composition pour vernis isolant, dont la polymérisation à chaud entraîne une faible émission de COV.

La présente invention a donc pour objet une composition liquide pour la préparation de vernis comprenant :
- une résine polyester modifiée par des groupes dicyclopentadiène et,
- une résine époxyde et un agent durcisseur adapté à ladite résine époxyde.

Les systèmes de résine polyester et de résine époxyde de ladite composition sont compatibles et miscibles, de manière à pouvoir générer ultérieurement après polymérisation deux réseaux interpénétrés de polymères thermodurcis. De plus, ladite composition est exempte de styrène, vinyltoluène et phtalate de diallyle.

La composition selon l'invention permet d'obtenir après polymérisation à chaud, un vernis qui combine les propriétés de la résine polyester et les propriétés de la résine époxyde. En effet, la composition selon l'invention est un liquide visqueux, qui, une fois chauffé se fluidifie rapidement pour polymériser à une température élevée et générer deux réseaux interpénétrés de polymères dont les chaînes polymériques s'enchevêtrent physiquement pendant la polymérisation de chacun des deux polymères. La gélification et la polymérisation des deux réseaux ont lieu simultanément. Les deux systèmes de résines étant compatibles et miscibles, c'est-à-dire que leurs groupes fonctionnels principaux peuvent facilement être mélangés et que leur vitesse de gélification et avantageusement de polymérisation sont comparables, la composition selon l'invention donne après gélification/polymérisation un réseau polymérique relativement homogène où polymère époxyde et polymère polyester s'interpénètrent. On n'observe donc pas de phénomène d'exsudation ou de séparation des deux types de réseaux polymériques.

Par ailleurs, de par l'absence de styrène et de vinyltoluène ladite composition présente l'avantage d'émettre lors de sa gélification/polymérisation, une très faible quantité de COV, avantageusement moins de 2,5 % en poids par rapport au poids initial de la composition.

La présente invention a également pour objet un procédé de préparation d'une composition ci-dessus mentionnée, comprenant les étapes suivantes :
a) préparation d'un système de résine polyester comprenant une résine polyester modifiée par des groupes dicyclopentadiène par hydrolyse d'anhydride maléique suivie d'une première estérification d'une partie des fonctions acides obtenues avec un dérivé de dicyclopentadiène, puis d'une seconde estérification des fonctions acides restantes avec un polyol ; et
b) mélange du système de résine polyester avec une résine époxyde et un agent durcisseur adapté à ladite résine époxyde.

L'objet de l'invention concerne également des vernis thermodurs constitués d'un premier réseau polymérique de polyester modifié avec des groupes dicyclopentadiène et interpénétré avec un deuxième réseau polymérique d'époxyde, ledit vernis présentant une température de transition vitreuse unique, ainsi que les vernis thermodurs susceptibles d'être obtenus par polymérisation d'une composition liquide ci-dessus mentionnée.

L'invention a également pour objet un procédé de préparation d'un vernis tel que ci-dessus, comprenant les étapes suivantes : gélification d'une composition ci-dessus mentionnée et polymérisation des prépolymères ainsi obtenus après gélification.

Enfin, l'invention concerne également l'utilisation d'une composition ou d'un vernis selon l'invention pour l'isolation électrique de composants électriques tels que des fils, bobinages, moteurs, alternateurs, transformateurs, stators ou rotors.

La composition liquide selon l'invention contient tout d'abord une résine polyester modifiée avec des groupes dicyclopentadiène. Cette résine polyester est une base très visqueuse obtenue en faisant réagir de l'anhydride maléique et du dicyclopentadiène dans un premier temps, puis en réalisant une réaction d'estérification par ajout d'un diol linéaire jusqu'à obtenir un indice d'acide très bas.

La première étape consistant à hydrolyser de l'anhydride maléique et l'étape d'estérification avec le dicyclopentadiène sont généralement réalisées à une température proche de 100° C, de préférence inférieure ou égale à 130° C. L'étape suivante consistant à estérifier les fonctions acides en excès par les groupes polyols, s'effectue à une température plus élevée, de préférence supérieure à 150° C et préférentiellement de l'ordre de 200°C. Ces deux étapes sont illustrées par le SCHEMA 1 ci-après dans lequel R est un groupe alkyle approprié.

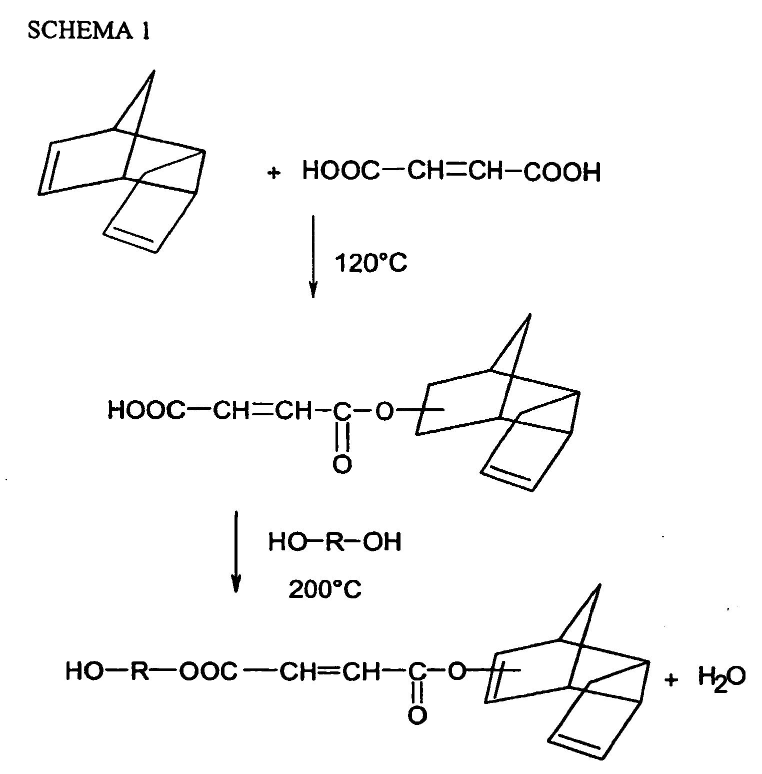

Les polyols utilisés sont avantageusement des diols linéaires, tels que des polyéthers diols comme le méthylglycol ou le polypropylène glycol ou bien des diols avec une chaîne alcane saturée comme le butane diol, l'hexane diol, le méthylpropane diol ou encore le néopropylène glycol.

Afin de permettre la polymérisation par chauffage ultérieur, des catalyseurs de la résine polyester encore nommés amorceurs de radicaux libres sont avantageusement ajoutés à la résine polyester. On pourra par exemple utiliser des péroxydes ou bien des composés azo bis ou pinacols. En tant que péroxyde, on pourra citer le di(tertiobutylcyclohexyl)peroxydicarbonate, le peroctoate de butyle tertiaire, le perbenzoate de butyle tertiaire, le peroxylsononoate tertiaire, le peroxyde de dicumyle, ou le peroxyde de benzoyle, en tant que benzopinacol, on pourra citer l'initiateur BK vendu par la société BAYER, et comme exemple d'azo bis, les produits vendus par la société DUPONT DE NEMOURS sous les références VAZO V88 ou V67.

La composition liquide selon l'invention contiendra donc avantageusement une résine polyester insaturée modifiée avec des groupes dicyclopentadiènes, en combinaison avec un amorceur de radicaux libres, qui sera de préférence un péroxyde.

La composition selon l'invention contient ensuite une résine époxyde associée à un agent durcisseur adapté.

En tant que résine époxyde, on pourra utiliser toute résine époxyde telle que décrite notamment dans « handbook of epoxy resins » de LEE & NEVILLE 1982. De préférence, des résines époxydes dont la viscosité n'excède pas 15 Pa.s à 25° C et en particulier des résines bifonctionnelles seront mises en oeuvre. Avantageusement, on utilisera des résines époxydes aliphatiques ou cycloaliphatiques, ou de préférence des bis-phénols A de bas poids moléculaire, des bis-phénols F et leur mélange avec des bis-phénols A.

Il est également possible d'utiliser une époxyde plus liquide, telle que la 1,6-hexane diol diglycidyléther en combinaison avec une autre résine plus visqueuse, afin d'obtenir une viscosité inférieure ou égale à 15 Pa.s à 25° C.

En particulier, pourront être utilisées les résines époxydes suivantes :
- résines époxydes commercialisées par SHELL sous les références EPON^{®} 815, 827, 828 et 862,
- résines époxydes commercialisées par DOW Chem sous les références DER^{®} 330, 331, 332, 358, 732 et 736,
- résine époxyde commercialisée par BAKELITE sous la référence RUTAPOX^{®} 166,
- résine époxyde commercialisée par EMS sous la référence GRINOLIT^{®} RV1812,
- et la résine époxyde commercialisée par VANTICO sous la référence ARALDITE^{®} CY179.

La résine époxyde est utilisée en combinaison avec un durcisseur adapté à ladite résine. Les anhydrides d'acide sont particulièrement préférés : ces durcisseurs permettent une polymérisation à chaud mais n'altèrent pas la stabilité du mélange époxy/anhydride d'acide de départ qui se conserve pendant plusieurs semaines à température ambiante. En particulier, on préférera les anhydrides d'acide liquides de viscosité telle qu'ils permettent d'obtenir une viscosité à 25 ° C pour le mélange époxyde/anhydride d'acide inférieure ou égale à 1200 mPa.s et, en particulier, les anhydrides d'acide commercialisés par la société LONZA, tels que l'anhydride méthylhexahydrophtalique (MHHPA), l'anhydride hexahydrophtalique, (HHPA), l'anhydride méthyltétrahydrophtalique (MTHPA), l'anhydride méthylnadique (MNA) ou l'anhydride dodécénylsuccinique (DDSA).

Par ailleurs, le système de résines époxyde peut également contenir des accélérateurs d'époxydes, afin que ce système de résines époxydes ait une durée de conservation de plusieurs semaines à température ambiante, tout en ayant une réaction de polymérisation possible à 100° C . En particulier, des complexes de bores-amines ou des sels métalliques ou encore, des sels d'ammonium quaternaires pourront être utilisés. A titre d'exemple, on peut citer les complexes de bore commercialisés par la société VANTICO sous la référence DY9577 ou par la société ANCHOR chem sous la référence Anchor 1115 ou bien les sels d'ammonium commercialisés par la société BETEC sous la référence BTMAC ou encore les sels métalliques du type acétyl acétonate de fer commercialisés par la société HULS ou bien les octaSoligen de zinc commercialisés par la société BORCHERS.

La composition selon l'invention est caractérisée par le fait que le système de résines polyesters et le système de résines époxydes présentent des temps de gel comparables, afin d'obtenir lors de la montée en température, des polymérisations synchronisées et ainsi une interpénétration de chacun des deux réseaux polymériques obtenus.

Les deux mécanismes de polymérisation des deux réseaux sont très différents et interdisent donc la formation d'un copolymère. En effet, la polymérisation du polyester insaturé se fait pas polyaddition radicalaire et est donc facilitée par un amorceur de radicaux libres jouant le rôle de catalyseur. La polymérisation de l'époxyde, quant à elle, nécessite la présence d'un durcisseur adapté, par exemple de type anhydride d'acide et se fait par polycondensation, c'est-à-dire estérification de l'anhydride d'acide par l'époxyde. La présence d'agents accélérateur permet d'ajuster les temps de gel/polymérisation et d'obtenir la simultanéité.

L'homme de l'art sera donc à même de choisir les différents composants ainsi que leur accélérateur afin d'obtenir à la fois pour le système de résine polyester et le système de résine époxyde des temps de gel de préférence compris entre 5 et 20 minutes à 150° C et encore préférentiellement de 10 minutes à 130° C.

Le mélange des deux systèmes de résines polyesters et époxydes est en général réalisé à une température proche de 50° C et on obtient donc une composition liquide selon l'invention, contenant les prépolymères compatibles qui pourront ensuite polymériser simultanément à des températures supérieures à 100° C en enchevetrant leurs chaînes polymériques.

La composition selon l'invention présente une viscosité inférieure ou égale à 170 mPa.s à 100° C, de préférence inférieure ou égale à 130 mPa.s à 100° C.

La composition selon l'invention contient de préférence un système de résines époxydes à raison de 35 % au plus, de préférence de 10 à 30 % en poids de la composition. L'agent durcisseur adapté à la résine époxyde est avantageusement un anhydride d'acide et en particulier un anhydride d'acide tel que le mélange résine époxyde/anhydride d'acide présente une viscosité Epprecht inférieure ou égale à 1200 mPa.s à 25° C.

En particulier, on préférera utiliser de façon avantageuse un système de résine époxyde contenant un rapport molaire de 0,50 à 1,20, de préférence de 0,80 à 1,20, préférentiellement de 0,90 à 0,98 d'agent durcisseur anhydride d'acide/résine époxyde et 0,1 à 5 % en poids d'agent accélérateur adapté. Avantageusement, on utilisera un mélange de 50 à 60 % en poids d'un mélange de bis phénol A et de bis phénol F, de 40 à 45 % en poids d'anhydride méthyle nadique et de 1,5 à 2,5 % en poids d'un complexe d'amine-trichlorure de bore.

De même, on utilisera avantageusement un système de résine polyester obtenu à partir de 1 mole de dicyclopentadiène pour 0,8 à 2 moles d'anhydride maléique, 0,3 à 1,5 moles de diol et 1 à 10 % en poids d'ammorceur de radicaux libres adapté. Avantageusement, le système de résine polyester sera obtenu à partir de 25 à 40 % en poids de dicyclopentadiène, 25 à 35 % d'anhydride maléique, 20 à 30 % en poids de 1,6-hexanediol et de 2 à 7 % de peroxybenzoate de tert-butyle.

Par ailleurs, dans le cas où il est souhaitable d'avoir ultérieurement une polymérisation du polyester par voie radicalaire qui soit amorcée par voie UV, la composition selon l'invention pourra contenir un photoamorceur tel que par exemple les photoamorceurs vendus par la société CIBA sous les références IRGACURE^{®} 184, 819 ou 907 et par la société BASF sous la référence LUCIRIN^{®} TPO. Ces photoamorceurs pourront être utilisés en combinaison avec des diluants présentant un point éclair (norme ISO 2719) supérieur ou égal à 90° C, tels que des acrylates et en particulier, les produits vendus :
- par la société COGNIS sous les références: Photomer^{®} 8149, 4171F, 4818F, 8127,
- par la société CRAY VALLEY sous les références SR 489, SR 531, 506,
- et par la société UCB sous les références ebecryl^{®} 111, CL 1039.

Les acrylates ont pour fonction d'apporter des insaturations supplémentaires et ainsi de faciliter la polymérisation radicalaire de la résine polyester insaturée.

Par ailleurs, la composition selon l'invention peut contenir divers additifs courramment utilisés dans le domaine des vernis et des peintures, tels que des agents stabilisants dont les plus connus sont la famille des quinones ou autres absorbeurs de radicaux libres ou anti-oxydants, telle que l'hydroquinone, la benzoquinone, la 2-méthyl hydroquinone, la méthyltertiobutyl hydroquinone, la paraméthoxy phénol 3,5-ditertiobutyl hydroxyanisol ou la phénothiazine. D'autres additifs tels que des agents colorants, des agents d'étalement, des agents mouillants, des antibulles, des siccatifs, des agents anti-rayures, des agents tensioactifs, des agents plastifiants ou des agents tackifiants pourront, par exemple, être additionnés. Il appartiendra à l'homme de l'art de choisir l'additif approprié en fonction de l'effet recherché.

La présente invention a également pour objet le vernis thermodur susceptible d'être obtenu par polymérisation d'une composition liquide selon l'invention. Un tel vernis thermodur est constitué d'un premier réseau polymérique de polyesters modifié avec des groupes dicyclopentadiène et interpénétré avec un deuxième réseau polymérique d'époxyde, ledit vernis présentant une température de transition vitreuse unique, de préférence comprise entre 30 et 110° C. Ce vernis est préparé par exemple par gélification d'une composition selon l'invention suivie d'une polymérisation à chaud avantageusement à une température supérieure à 100° C du gel ainsi obtenu. La polymérisation peut être réalisée par voie UV.

Pendant l'étape de gélification et pendant l'étape de polymérisation, moins de 2,5 % de composés organiques sont libérés, ce qui présente un avantage considérable par rapport aux solutions de l'art antérieur. En effet, la composition liquide selon l'invention est exempte de styrène, vinyltoluène et phtalate de diallyle. L'absence de monomère et de diluant réactif du polyester insaturé de point éclair inférieur à 80° C permet de réduire considérablement la libération de COV lors des étapes de gélification et polymérisation.

Par ailleurs, lors de la polymérisation, les retraits volumiques sont quasi inexistants et aucune fissure n'est observée.

Le vernis selon l'invention présente donc d'excellentes performances mécaniques (de souplesse et d'adhérence), chimiques (de résistance à l'eau) et électriques (d'isolation).

La composition selon l'invention ainsi que le vernis obtenus peuvent être utilisés pour l'isolation électrique de fils, bobinages, moteurs, alternateurs, transformateurs, stators ou rotors.

Les techniques d'imprégnation des composants électriques seront adaptées en fonction de la taille desdits composants.

Les exemples ci-après illustrent l'invention mais n'ont nullement un caractère limitatif. L'ensemble des viscosités données dans la présente demande de brevet sont des viscosités Epprecht mesurées avec un viscosimètre de la société Epprecht du type cône plan. Les teneurs en COV sont obtenues à partir de 15 g de composition selon l'invention disposée dans une coupelle de 55 mm de diamètre et soumis à un chauffage de 1 heure à 120° C suivi de 5 heures à 150° C. Elles sont exprimées en % de perte de poids obtenue après ledit cycle de gélification/polymérisation.

### EXEMPLE 1

### A) PROCEDE DE SYNTHESE DE LA RESINE POLYESTER INSATURE SANS MONOMERE

| **Matières premières** | **pourcentage massique** |
|---|---|
| Anhydride maléique | 30,70 |
| Eau déminéralisée | 5,91 |
| Dicyclopentadiène | 33,10 |
| Catalyseur dérivé d'étain | 0,01 |
| 1,6-Hexanediol | 25,47 |
| Hydroquinone | 0,05 |
| Peroxybenzoate de tert-butyle | 4,76 |

Du cyclohexane est utilisé pour l'azéotrope avec l'eau.

### 1ère étape :

### i) HYDROLYSE DE L'ANHYDRIDE MALEIQUE

L'anhydride maléique est chargé dans un réacteur et chauffé pour atteindre une température de 100°C. Lorsque la température atteint 50°C, le réacteur est mis sous atmosphère d'azote et sous agitation. Vers 60°C, l'anhydride maléique fond et le mélange devient translucide. Quand la température atteint 100°C, l'eau est lentement introduite. Lorsque l'exotherme se développe, la température est maintenue entre 100 et 120°C. Lorsque l'addition d'eau est terminée, le mélange est maintenu à 120°C pendant 15 minutes pour que l'hydrolyse soit complète.

### ii) ADDITION DU DICYCLOPENTADIENE

Le dicyclopentadiène est lentement ajouté. Il est primordial que la température du réacteur ne dépasse pas 130°C durant cette étape. L'ajout de dicyclopentadiène terminé, la température est maintenue à 120°C pendant 2 heures.

### 2ème étape : REACTION D'ESTERIFICATION

Le 1,6-hexanediol, le catalyseur et une quantité suffisante de cyclohexane permettant de remplir la colonne à distiller et un retour sur cuve, sont additionnés.
Lorsque le chargement est terminé, le programme de températures suivant est appliqué :
- rampe de température de 120 à 160°C en 1 heure
- palier à 160°C pendant 1 heure
- rampe de température de 160 à 200°C en 1 heure
- palier à 200°C pendant 1 heure

Quand on atteint une viscosité comprise entre 130 et 170 mPa.s, le chauffage est arrêté et le mélange est rapidement refroidi. La viscosité est mesurée à 100° C avec un viscosimètre de la société Epprecht du type cône-plan. Lorsque la température du réacteur atteint 160°C, l'hydroquinone est ajoutée.
Lorsque la température atteint environ 40°C, le peroxybenzoate de *tert*-butyle est enfin additionné.

### Propriétés de la résine liquide obtenue (A liquide):

| | | |
|---|---|---|
| Viscosité Epprecht (mPa.s) | 100°C | 135 |
| | 125°C | 60 |
| | 150°C | 40 |
| Temps de gel 20g (min : sec) | 120°C | 30:29 |
| | | |
| | 130°C | 11:49 |
| | 150°C | 3:30 |
| Teneur en COV (%) | | 2,1 |
| Exothermie (J / g) | DSC | 207 |
| Conservation 100g (jours) | 50°C | >100 |

### Propriétés sur vernis polymérisé pendant 1 heure à 120°C puis pendant 5 heures à 150°C (A solide):

| | | |
|---|---|---|
| Aspect échantillon polymérisé | surface retrait | lisse et non collante nul |
| Tg (°C) échantillon après montée à 200° C | DSC | 66 |
| Pouvoir agglomérant (daN) | T.amb. | 35 |
| (selon norme IEC 1033) | 100°C | 23 |
| | 150°C | 16 |
| | 180°C | 9 |

### B) FORMULATION DU SYSTEME EPOXYDIQUE

| **Matières premières** | **pourcentage massique** |
|---|---|
| Résine époxydique liquide obtenu à partir du Bis phénol A / Bis phénol F Bakelite RUTAPOX 166 | 54,47 |
| Anhydride méthyle nadique | 43,57 |
| Complexe d'amine-trichlorure de bore | 1,96 |

La résine époxydique et l'anhydride méthyle nadique sont mélangés jusqu'à l'obtention d'un mélange limpide. Le complexe d'amine-trichlorure de bore est ensuite ajouté et l'ensemble est mélangé.

### Propriétés sur de la résine liquide obtenue (Z liquide):

| | | |
|---|---|---|
| Viscosité Epprecht (mPa.s) | 100°C | 20 |
| Temps de gel 20g (min : sec) | 120°C | 11:28 |
| | | |
| | 130°C | 6:01 |
| | 150°C | 2:41 |
| Teneur en COV (%) | | 1,1 |
| Exothermie (J / g) | DSC | 173 |
| Conservation 100g (jours) | 50°C | 8 |

### Propriétés sur vernis polymérisé pendant 1 heure à 120°C puis pendant 5 heures à 150°C (Z solide):

| | | |
|---|---|---|
| Aspect échantillon polymérisé | surface retrait | Lisse et non collante nul |
| Tg (°C) échantillon | DSC | 143 |
| Pouvoir agglomérant (daN) | T. amb. | 47 |
| | 100°C | 44 |
| | 150°C | 33 |
| | 180°C | 21 |

### C) PREPARATION DU RESEAU DE POLYMERES INTERPENETRE (RPI)

| | |
|---|---|
| Lorsque l'on mélange | 70 parts de résine polyester (**A liquide**) et |
| | 30 parts de système époxydique (**Z liquide**) |

on obtient une résine dont les caractéristiques sont les suivantes :

### Propriétés sur résine liquide (A₇₀ Z₃₀ liquide):

| | | |
|---|---|---|
| Viscosité Epprecht (mPa.s) | 100°C | 90 |
| | 125°C | 40 |
| | 150°C | 25 |
| Temps de gel 20g (min : sec) | 120°C | 33:51 |
| | 130°C | 11:40 |
| | 150°C | 3:52 |
| Teneur en COV(%) | | 1,5 |
| Exothermie (J / g) | DSC | 137 |
| Conservation 100g (jours) | 50°C | 29 |

### Propriétés sur vernis polymérisé pendant 1 heure à 120°C puis pendant 5 heures à 150°C (A₇₀ Z₃₀ solide):

| | | |
|---|---|---|
| Aspect échantillon polymérisé | Surface retrait | Lisse et non collante nul |
| Tg (°C) échantillon | DSC | 88 |
| Pouvoir agglomérant (daN) | T amb. | 39 |
| | 100°C | 16 |
| | 150°C | 7 |
| | 180°C | 5 |

### EXEMPLE 2 : VARIATION DE LA COMPOSITION DU RPI

Les exemples suivants correspondent à une résine semblable à la résine de l'exemple 1 mais catalysée comme suit :
2% de peroxybenzoate de *tert*-butyle
1% de catalyseur à base de benzopinacole
2% de 1,1-Bis(*tert*-butylpéroxy)-3,3,5-triméthylcyclohexane (75% dans aliphatiques)
2% de complexe d'aminé trichlorure de bore

Le système époxyde **Z** reste donc inchangé par contre le système polyester **B** diffère par la nature des accélérateurs utilisés.

### Propriétés sur la résine liquide obtenue (nommée BₓZ_{y} liquide)

| | | **B₉₀ Z₁₀** | **B₈₀ Z₂₀** | **B₇₀ Z₃₀** |
|---|---|---|---|---|
| Viscosité Epprecht (mPa.s) | 100°C | 110 | 90 | 70 |
| | 125°C | 50 | 40 | 30 |
| | 150°C | 35 | 30 | 20 |
| Temps de gel 20g (min :sec) | 120°C | 19:41 | 25:51 | 30:30 |
| | | | | |
| | 130°C | 8:19 | 10:39 | 11:20 |
| | 150°C | 3:20 | 3:51 | 4:01 |
| Teneur en COV(%) | | 2,4 | 2,2 | 1,8 |
| Exothermie (J / g) | DSC | 115 | 95 | 114 |
| Conservation 100g (jours) | 50°C | >100 | 57 | 29 |

### Propriétés sur vernis polymérisé pendant 1 heure à 120° C puis pendant 5 heures à 150°C (BₓZ_{y} solide):

| | | **B₉₀ Z₁₀** | **B₈₀ Z₂₀** | **B₇₀ Z₃₀** |
|---|---|---|---|---|
| Aspect échantillon polymérisé | surface | lisse et non collante | lisse et non collante | lisse et non collante |
| Tg (°C) échantillon | DSC | 36 | 44 | 51 |

### EXEMPLE 3 : AUTRE PROCEDE DE PREPARATION DU RPI

Les quantités et matières premières mises en oeuvre sont identiques à celles de l'exemple 1. Cet exemple diffère de l'exemple 1 car on ajoute en fin de synthèse polyester, la formulation époxyde adéquate.

La composition pondérale devient :

| **Matières premières** | **pourcentage massique** |
|---|---|
| Anhydride maléique | 24,560 |
| Eau déminéralisée | 4,728 |
| Dicyclopentadiène | 26,480 |
| Catalyseur dérivé d'étain | 0,008 |
| 1,6 hexane diol | 20,376 |
| Hydroquinone | 0,040 |
| péroxybenzoate de tertio-butyle | 3,808 |
| époxyde bis-phénol A/F | 10,896 |
| anhydride méthyle nadique | 8,712 |
| complexe de bore-amine | 0,392 |

### 1ère étape :

### i) HYDROLYSE DE L'ANHYDRIDE MALEIQUE

L'anhydride maléique est chargé dans un réacteur et chauffé pour atteindre une température de 100°C. Lorsque la température atteint 50°C, le réacteur est mis sous atmosphère d'azote et sous agitation. Vers 60°C, l'anhydride maléique fond et le mélange devient translucide. Quand la température atteint 100°C, l'eau est lentement introduite. Lorsque l'exotherme se développe, la température est maintenue entre 100 et 120°C. Lorsque l'addition d'eau est terminée, le mélange est maintenu à 120°C pendant 15 minutes pour que l'hydrolyse soit complète.

### ii) ADDITION DU DICYCLOPENTADIENE

Le dicyclopentadiène est lentement ajouté. Il est primordial que la température du réacteur ne dépasse pas 130°C durant cette étape. L'ajout de dicyclopentadiène terminé, la température est maintenue à 120°C pendant 2 heures.

### 2ème étape : REACTION D'ESTERIFICATION

Le 1,6-hexanediol, le catalyseur et une quantité suffisante de cyclohexane permettant de remplir la colonne à distiller et un retour sur cuve, sont additionnés.

Lorsque le chargement est terminé, le programme de températures suivant est appliqué :
- rampe de température de 120 à 160°C en 1 heure
- palier à 160°C pendant 1 heure
- rampe de température de 160 à 200°C en 1 heure
- palier à 200°C pendant 1 heure

Quand la viscosité désirée est obtenue, le chauffage est arrêté et le mélange est rapidement refroidi.
Lorsque la température du réacteur atteint 160°C, l'hydroquinone est ajoutée.

### 3ème étape :

A 80°C, l'anhydride méthyle nadique est additionné. Lorsque la température atteint environ 70 °C, la résine époxydique est ajoutée. Lorsque la température atteint environ 50°C, le complexe d'amine-trichlorure de bore est ajouté, puis lorsque la température atteint environ 40°C, le peroxybenzoate de tert-butyle est ajouté.

### EXEMPLE 4 : INFLUENCE DE LA NATURE DU SYSTEME EPOXYDIQUE

### DIFFERENTS SYSTEMES EPOXYDIQUES POSSIBLES POUR LA FORMULATION DU RPI

De nombreuses résines époxydiques ainsi que plusieurs durcisseurs anhydrides peuvent être utilisés afin d'obtenir une formulation différente.
Quelques mélanges possibles sont regroupés dans le tableau suivant.

| | **W** | **X** | **Y** | **Z** |
|---|---|---|---|---|
| Résine époxydique produite à partir de | Bis phénol A DER 332 | Aliphatique CY179 | Aliphatique CY179 | Bis phénol A et Bis phénol F Rutapox 166 |
| Durcisseur anhydride | Anhydride méthyltétrahydrophtalique | Anhydride méthyl nadique | Anhydride dodécenyl succinique | Anhydride méthyl nadique |
| Taux massique | 100/89 | 100/194 | 100/100 | 100/80 |

Les exemples suivants correspondent à des résines formulées avec différents systèmes époxydiques (**X, Y, Z**) avec la même base polyester (**C**).
Par contre elles sont toutes catalysées comme suit :
3% de peroxybenzoate de tert-butyle
3% de complexe d'amine trichlorure de bore

| | | **C₇₀ X₃₀** | **C₇₀ Y₃₀** | **C₇₀ Z₃₀** |
|---|---|---|---|---|
| Viscosité Epprecht (mPa.s) | 100°C | 130 | 170 | 110 |
| | 125°C | 60 | 70 | 50 |
| | 150°C | 30 | 40 | 30 |
| Temps de gel 20g (min :sec) | 120°C | 29:12 | 23 :02 | 29 :11 |
| | 150°C | 3:59 | 3:29 | 4:31 |
| Teneur en COV (%) | | 1,2 | 0,6 | 1,3 |

### EXEMPLE 5 : INFLUENCE DE LA NATURE DU DIOL SUR LE POLYESTER

| **Polyester** | **D** | **E** | **F** |
|---|---|---|---|
| Diol utilisé | Triéthylène glycol | 1,4-Butanediol | Monoéthylène glycol |

Le tableau suivant présente quelques résultats concernant différentes bases polyester (synthétisées à l'aide de diols différents) toutes catalysées avec 5% de peroxybenzoate de tert-butyle

### Propriétés sur résine liquide :

| | | **D liquide** | **E liquide** | **F liquide** |
|---|---|---|---|---|
| Indice d'acide (mg KOH/g) | | 19 | 23 | 20 |
| Viscosité Epprecht (mPa.s) | 100°C | 130 | 250 | 400 |
| | 125°C | 60 | 100 | 130 |
| | 150°C | 30 | 50 | 60 |
| Temps de gel 20g (min :sec) | 120°C | 27:31 | 22:10 | 14:00 |
| | | | | |
| | 150°C | 3:09 | 3 :40 | 3 :10 |
| Teneur en COV (%) | | 2,6 | 1,0 | 0,3 |
| Conservation 100g (jours) | 50°C | >100 | 70 | 15 |

### Propriétés sur vernis polymérisé pendant 1 heure à 120°C puis pendant 5 heures à 150°C:

| | | **D solide** | **E solide** | **F solide** |
|---|---|---|---|---|
| Aspect échantillon | surface | lisse et non collante | lisse et non collante | lisse et non collante |

### EXEMPLE 6 : AUTRES EXEMPLES DE RPI

Les exemples suivants correspondent à des résines formulées avec différents bases polyester (**E, F**) mais avec le même système époxydique (**Z**)
Par contre, elles sont toutes catalysées comme suit :
5% de peroxybenzoate de tert-butyle
3% de complexe d'amine trichlorure de bore

### Propriétés sur de la résine liquide obtenue :

| | | **E₈₀ Z₂₀** | **F₈₀ Z₂₀** |
|---|---|---|---|
| Viscosité Epprecht (mPa.s) | 100°C | 130 | 160 |
| | 125°C | 55 | 60 |
| | 150°C | 35 | 40 |
| Temps de gel 20g (min :sec) | 120°C | 24:50 | 16:00 |
| | | | |
| | 150°C | 3:31 | 3:08 |
| Teneur en COV (%) | | 1,4 | 1,0 |
| Conservation 100g (jours) | 50°C | 29 | 20 |

### Propriétés sur vernis polymérisé pendant 1 heure à 120°C puis 5 heures à 150°C :

| | | **E₈₀ Z₂₀** | **F₈₀ Z₂₀** |
|---|---|---|---|
| Aspect gateau | surface | lisse et non collante | lisse et non collante |

### EXEMPLE 7 : DIFFERENTES CATALYSES POSSIBLES POUR LE RPI

Le mode de préparation de l'exemple 3 est employé pour obtenir le RPI **G₈₀ V₂₀**, dans lequel :
- G est obtenu à partir de l'hexanediol et 5% de peroxybenzoate de tert-butyle
- V est à base de Bis phénols A et F, et MNA avec 2% de complexe.

A partir de cette version **G₈₀ V₂₀**, on peut obtenir :
- une version plus réactive (**G₈₀ V₂₀** bis) en ajoutant 4% de 1,1-Di(*tert-*butylperoxy)-3,3,5-triméthylcyclohexane
- une version très réactive (**G₈₀ V₂₀** ter) en ajoutant 0,01% d'octoate de cobalt
- une version UV en ajoutant un mélange de composés à base de benzophénone et d'oxyde de phosphine (**G₈₀ V₂₀** uv)

| | | **G₈₀ V₂₀** | **G₈₀ V₂₀ bis** | **G₈₀ V₂₀ ter** | **G₈₀ V₂₀ uv** |
|---|---|---|---|---|---|
| Temps de gel 20g (min) | 110°C | | 55 | 20 | 37 |
| | | | | | |
| | 120°C | 32 | 19 | 11 | 17 |
| Exothermie (J / g) | DSC | 142 | 160 | 100 | 107 |
| Conservation 100g | 50°C | 59 | 65 | 30 | 29 |
| (jours) | | | | | |

## Revendications

1. **-** Composition liquide pour la préparation de vernis comprenant :
- une résine polyester modifiée par des groupes dicyclopentadiène, et
- une résine époxyde et un agent durcisseur adapté à ladite résine époxyde,
**caractérisé en ce que** :
- les systèmes de résine polyester et de résine époxyde sont compatibles et miscibles, de manière à pouvoir générer ultérieurement deux réseaux interpénétrés de polymères thermodurcis ; et
- ladite composition est exempte de styrène, vinyltoluène et phtalate de diallyle.

2. - Composition selon la revendication 1, **caractérisée en ce que** le système de résine polyester et le système de résine époxyde présentent des temps de gel comparables, de préférence de 5 à 20 minutes à 130° C, préférentiellement de 10 minutes à 130° C.

3. **-** Composition selon la revendication 1 ou 2, **caractérisée en ce qu'**elle présente une viscosité Epprecht inférieure ou égale à 170 mPa.s à 100 °C, de préférence inférieure ou égale à 130 mPa.s.

4. **-** Composition selon l'une des revendications 1 à 3, **caractérisée en ce qu'**elle comprend en outre un amorceur de radicaux libres, catalyseur de la polymérisation de la résine polyester insaturée modifiée par des groupes dicyclopentadiènes.

5. **-** Composition selon l'une des revendications 1 à 4, **caractérisée en ce qu'**elle comprend en outre un agent accélérateur de polymérisation adapté au système époxyde.

6. - Composition selon les revendications 1 à 5, **caractérisée en ce que** le système de résine époxyde représente au plus 35 %, de préférence de 10 à 30 % en poids de la composition.

7. **-** Composition selon les revendications 1 à 6, **caractérisée en ce que** l'agent durcisseur adapté à la résine époxyde est un anhydride d'acide.

8. **-** Composition selon la revendication 7, **caractérisée en ce que** l'agent durcisseur est un anhydride d'acide et **en ce que** le mélange résine époxyde/anhydride d'acide présente une viscosité inférieure ou égale à 1200 mPa.s à 25° C.

9. - Composition selon l'une des revendications 1 à 8, **caractérisée en ce que** le système de résine époxyde contient un rapport molaire de 0,50 à 1,20, de préférence 0,80 à 1,20, préférentiellement de 0,90 à 0,98 d'agent durcisseur anhydride d'acide/résine époxyde et 0,1 à 5 % en poids d'agent accélérateur adapté.

10. - Composition selon l'une des revendications 1 à 8, **caractérisée en ce que** le système de résine époxyde contient 50 à 60 % en poids d'un mélange de bis phénol A et de bis phénol F, de 40 à 45 % en poids d'anhydride méthyle nadique et de 1,5 à 2,5 % en poids d'un complexe d'amine-trichlorure de bore.

11. - Composition selon la revendication 4, **caractérisée en ce que** l'amorceur de radicaux libres est un péroxyde.

12. **-** Composition selon l'une des revendications 1 à 11, **caractérisée en ce qu'**elle comprend un photoamorceur.

13. - Procédé de préparation d'une composition selon l'une des revendications 1 à 12, comprenant les étapes suivantes :
a) préparation d'un système de résine polyester comprenant une résine polyester modifiée par des groupes dicyclopentadiène par hydrolyse d'anhydride maléique suivie d'une première estérification d'une partie des fonctions acides obtenues avec un dérivé de dicyclopentadiène, puis d'une seconde estérification des fonctions acides restantes avec un polyol ; et
b) mélange du système de résine polyester avec une résine époxyde et un agent durcisseur adapté à ladite résine époxyde.

14. - Procédé selon la revendication 13, **caractérisé en ce qu'**à l'étape a), on utilise un diol linéaire en tant que polyol.

15. - Procédé selon la revendication 13 ou 14, **caractérisé en ce que** le système de résine polyester est obtenu à partir de 1 mole de dicyclopentadiène pour 0,8 à 2 moles d'anhydride maléique, 0,3 à 1,5 moles de diol et 1 à 10 % en poids d'agent accélérateur adapté.

16. - Procédé selon la revendication 13 ou 14, **caractérisé en ce que** le système de résine polyester est obtenu à partir de 25 à 40 % en poids de dicyclopentadiène, 25 à 35 % d'anhydride maléique, 20 à 30 % en poids de 1,6-hexanediol et de 2 à 7 % de peroxybenzoate de *tert*-butyle.

17. **-** Vernis thermodur constitué d'un premier réseau polymérique de polyester modifié avec des groupes dicyclopentadiène et interpénétré avec un deuxième réseau polymérique d'époxydes, ledit vernis présentant une température de transition vitreuse unique.

18. - Vernis thermodur susceptible d'être obtenu par polymérisation d'une composition liquide selon l'une des revendications 1 à 12.

19. **-** Vernis selon la revendication 17 ou 18 présentant une température de transition vitreuse de 30 à 110°C.

20. **-** Procédé de préparation d'un vernis selon l'une des revendications 17 à 19, **caractérisé en ce qu'**il comprend les étapes suivantes :
- gélification de préférence à une température de 100 à 150°C, d'une composition selon l'une des revendications 1 à 12 ; et
- polymérisation de préférence à une température de 130 à 200°C des prépolymères ainsi obtenus après gélification.

21. **-** Procédé selon la revendication 20, **caractérisé en ce qu'**on utilise une composition selon la revendication 12 et **en ce que** la polymérisation est réalisée par voie UV.

22. **-** Procédé selon la revendication 20 ou 21, **caractérisé en ce que** pendant l'étape de gélification et pendant l'étape de polymérisation, moins de 2,5 % en poids par rapport au poids de la composition initiale de composés organiques volatiles sont libérés.

23. - Utilisation d'une composition selon l'une des revendications 1 à 12 ou d'un vernis selon l'une des revendications 17 à 19 pour l'isolation électrique de fils, bobinages, moteurs, alternateurs, transformateurs, stators ou rotors.

## Claims

1. A liquid composition for preparing varnishes comprising:
- a polyester resin modified with dicyclopentadiene groups, and
- an epoxy resin and a curing agent adapted to said epoxy resin,
**characterized in that**:
- the polyester resin and epoxy resin systems are compatible and miscible, so that they may subsequently generate two interpenetrated networks of thermoset polymers; and
- said composition is free of styrene, vinyltoluene and diallyl phthalate.

2. The composition according to claim 1, **characterized in that** the polyester resin system and the epoxy resin system have comparable gelling times, preferably from 5 to 20 minutes at 130°C, preferentially 10 minutes at 130°C.

3. The composition according to claim 1 or 2, **characterized in that** it has an Epprecht viscosity less than or equal to 170 mPa.s at 100°C, preferably less than or equal to 130 mPa.s.

4. The composition according to claims 1 to 3, **characterized in that** it further comprises a free radical initiator, catalyst of the polymerisation of the unsaturated polyester resin modified by dicyclopentadiene groups.

5. The composition according to claims 1 to 4, **characterized in that** it further comprises a polymerization accelerator agent adapted to the epoxy system.

6. The composition according to claims 1 to 5, **characterized in that** the epoxy resin system accounts for 35% at the most, preferably from 10 to 30% by weight of the composition.

7. The composition according to claims 1 to 6, **characterized in that** the curing agent adapted to the epoxy resin is an acid anhydride.

8. The composition according to claim 7, **characterized in that** the curing agent is an anhydride acid and **in that** the epoxy resin/acid anhydride mixture has a viscosity less than or equal to 1,200 mPa.s at 25°C.

9. The composition according to claims 1 to 8, **characterized in that** the epoxy resin system contains a molar ratio from 0.50 to 1.20, preferably from 0.80 to 1.20, preferentially from 0.90 to 0.98 of acid anhydride/epoxy resin curing agent and 0.1 to 5% by weight of an adapted accelerator agent.

10. The composition according to claims 1 to 8, **characterized in that** the epoxy resin system contains 50 to 60% by weight of a mixture of bisphenol A and bisphenol F, from 40 to 45% by weight of nadic methyl anhydride and from 1.5 to 2.5% by weight of amine/boron trichloride complex.

11. The composition according to claim 4, **characterized in that** the free radical initiator is a peroxide.

12. The composition according to claims 1 to 11, **characterized in that** it comprises a photoinitiator.

13. A method for preparing a composition according to claims 1 to 12, comprising the following steps:
a) preparing a polyester resin system comprising a polyester resin modified by dicyclopentadiene groups by hydrolysis of maleic anhydride followed by a first esterification of a portion of the acid functions obtained with a dicyclopentadiene derivative, and then by a second esterification of the remaining acid functions with a polyol; and
b) mixing the polyester resin system with an epoxy resin and a curing agent adapted to said epoxy resin.

14. The method according to claim 13, **characterized that** a linear diol is used as a polyol in step a).

15. The method according to claim 13 or 14, **characterized in that** the polyester resin system is obtained from 1 mol of dicyclopentadiene for 0.8 to 2 moles of maleic anhydride, 0.3 to 1.5 moles of diol and 1 to 10% by weight of an adapted accelerator agent.

16. The method according to claim 13 or 14, **characterized in that** the polyester resin system is obtained from 25 to 40% by weight of dicyclopentadiene, 25 to 35% of maleic anhydride, 20 to 30% by weight of 1,6-hexanediol and from 2 to 7% of tert-butyl peroxybenzoate.

17. A thermoset varnish consisting of a first polymer network of polyester modified with dicyclopentadiene groups and interpenetrated with a second polymer network of epoxides, said varnish having a unique glass transition temperature.

18. A thermoset varnish capable of being obtained by polymerization of a liquid composition according to any of claims 1 to 12.

19. The varnish according to claim 17 or 18, having a glass transition temperature from 30 to 110°C.

20. A method for preparing a varnish according to any of claims 17 to 19, **characterized in that** it comprises the following steps:
- preferably gelling a composition according to any of claims 1 to 12 at a temperature of 100 to 150°C,; and
- preferably polymerizing the prepolymers at a temperature of 130 to 200°C, as thereby obtained after gelling.

21. The method according to claim 20, **characterized in that** a composition according to claim 12 is used and polymerization is achieved via UV irradiation.

22. The method according to claim 20 or 21, **characterized in that** during the gelling step and during the polymerization step, less than 2.5% by weight based on the weight of the initial composition of volatile organic compounds is released.

23. The use of a composition according to any of claims 1 to 12 or of a varnish according to any of claims 17 to 19 for electrically insulating wires, windings, motors, alternators, transformers, stators or rotors.

## Patentansprüche

1. Flüssige Zusammensetzung für die Herstellung von Lacken, umfassend:
- ein durch Dicyclopentadien-Gruppen modifiziertes Polyesterharz, sowie
- ein Epoxidharz und einen an das Epoxidharz angepaßten Härter,
**dadurch gekennzeichnet, daß**
- die Polyesterharz- und Epoxidharz-Systeme kompatibel und mischbar sind, so daß später zwei interpenetrierende Netzwerke aus wärmehärtenden Polymeren erzeugt werden können; und
- die genannte Zusammensetzung styrol-, vinyltoluol- und diallylphthalatfrei ist.

2. Zusammensetzung nach Anspruch 1, **dadurch gekennzeichnet, daß** das Polyesterharz-System und das Epoxidharz-System vergleichbare Gelzeiten, vorzugsweise zwischen 5 und 20 Minuten bei 130°C, vorzugsweise von 10 Minuten bei 130°C aufweisen.

3. Zusammensetzung nach Anspruch 1 oder 2, **dadurch gekennzeichnet, daß** sie eine Epprecht-Viskosität kleiner oder gleich 170 mPa.s bei 100°C, vorzugsweise kleiner oder gleich 130 mPa.s aufweist.

4. Zusammensetzung nach einem der Ansprüche 1 bis 3, **dadurch gekennzeichnet, daß** sie ferner einen Radikalinitiator, Katalysator der Polymerisation des durch Dicyclopentadien-Gruppen modifzierten, ungesättigten Polyesterharzes umfaßt.

5. Zusammensetzung nach einem der Ansprüche 1 bis 4, **dadurch gekennzeichnet, daß** sie ferner einen an das Epoxid-System angepaßten Polymerisationsbeschleuniger umfaßt.

6. Zusammensetzung nach den Ansprüchen 1 bis 5, **dadurch gekennzeichnet, daß** das Epoxidharz-System höchstens 35, vorzugsweise zwischen 10 und 30 Gew.-% der Zusammensetzung ausmacht.

7. Zusammensetzung nach den Ansprüchen 1 bis 6, **dadurch gekennzeichnet, daß** der an das Epoxidharz angepaßte Härter ein Säureanhydrid ist.

8. Zusammensetzung nach Anspruch 7, **dadurch gekennzeichnet, daß** der Härter ein Säureanhydrid ist und daß die Mischung aus Epoxidharz und Säureanhydrid eine Viskosität kleiner oder gleich 1200 mPa.s bei 25°C aufweist.

9. Zusammensetzung nach einem der Ansprüche 1 bis 8, **dadurch gekennzeichnet, daß** das Epoxidharz-System ein Molverhältnis von 0,50 zu 1,20, vorzugsweise von 0,80 zu 1,20, vorzugsweise von 0,90 zu 0,98 von Säureanhydrid-Härter zu Epoxidharz sowie 0,1 bis 5 Gew-% angepaßten Beschleuniger enthält.

10. Zusammensetzung nach einem der Ansprüche 1 bis 8, **dadurch gekennzeichnet, daß** das Epoxidharz-System 50 bis 60 Gew.-% einer Mischung aus Bisphenol A und aus Bisphenol F, 40 bis 45 Gew.-% Methylnadicanhydrid und 1,5 bis 2,5 Gew.-% eines Bortrichlorid-Aminkomplexes enthält.

11. Zusammensetzung nach Anspruch 4, **dadurch gekennzeichnet, daß** der Radikalinitiator ein Peroxid ist.

12. Zusammensetzung nach einem der Ansprüche 1 bis 11, **dadurch gekennzeichnet, daß** sie einen Photoinitiator umfaßt.

13. Verfahren zur Herstellung einer Zusammensetzung nach einem der Ansprüche 1 bis 12, das die folgenden Schritte umfaßt:
a) Herstellen eines Polyesterharz-Systems, das ein durch Dicyclopentadien-Gruppen modifiziertes Polyesterharz umfaßt, durch Maleinanydrid-Hydrolyse, an die sich eine erste Veresterung eines Teils der erhaltenen Säurefunktionen mit einem Dicyclopentadien-Derivat, dann eine zweite Veresterung der verbleibenden Säurefunktionen mit einem Polyol anschließt; und
b) Mischen des Polyesterharz-Systems mit einem Epoxidharz und einem an das Epoxidharz angepaßten Härter.

14. Verfahren nach Anspruch 13, **dadurch gekennzeichnet, daß** bei Schritt a) ein lineares Diol als Polyol verwendet wird.

15. Verfahren nach Anspruch 13 oder 14, **dadurch gekennzeichnet, daß** das Polyesterharz-System aus 1 Mol Dicyclopentadien für 0,8 bis 2 Mol Maleinanhydrid, 0,3 bis 1,5 Mol Diol und 1 bis 10 Gew.-% angepaßten Beschleuniger erhalten wird.

16. Verfahren nach Anspruch 13 oder 14, **dadurch gekennzeichnet, daß** das Polyesterharz-System aus 25 bis 40 Gew-% Dicyclopentadien, 25 bis 35 % Maleinanhydrid, 20 bis 30 Gew.-% 1,6-Hexandiol und 2 bis 7 % tert-Butylperoxybenzoat erhalten wird.

17. Wärmehärtender Lack, der von einem ersten polymeren Netzwerk aus Polyester gebildet ist, das mit Dicyclopentadien-Gruppen modifiziert und mit einem zweiten polymeren Netzwerk aus Epoxiden interpenetriert ist, wobei der Lack eine einzige Glasübergangstemperatur aufweist.

18. Wärmehärtender Lack, der geeignet ist, durch Polymerisation einer flüssigen Zusammensetzung nach einem der Ansprüche 1 bis 12 erhalten zu werden.

19. Lack nach Anspruch 17 oder 18, der eine Glasübergangstemperatur zwischen 30 und 110°C aufweist.

20. Verfahren zur Herstellung eines Lackes nach einem der Ansprüche 17 bis 19, **dadurch gekennzeichnet, daß** es die folgenden Schritte umfaßt:
- Gelierung, vorzugsweise bei einer Temperatur zwischen 100 und 150°C, einer Zusammensetzung nach einem der Ansprüche 1 bis 12; und
- Polymerisation, vorzugsweise bei einer Temperatur zwischen 130 und 200°C, der auf diese Weise nach der Gelierung erhaltenen Prepolymere.

21. Verfahren nach Anspruch 20, **dadurch gekennzeichnet, daß** eine Zusammensetzung nach Anspruch 12 verwendet wird und daß die Polymerisation durch UV-Strahlung vollzogen wird.

22. Verfahren nach Anspruch 20 oder 21, **dadurch gekennzeichnet, daß** während des Gelierungsschritts und während des Polymerisationsschritts weniger als 2,5 Gew.-% - bezogen auf das Gewicht der Ausgangszusammensetzung - flüchtiger organischer Verbindungen freigesetzt werden.

23. Verwendung einer Zusammensetzung nach einem der Ansprüche 1 bis 12 oder eines Lackes nach einem der Ansprüche 17 bis 19 für die elektrische Isolierung von Drähten, Wicklungen, Motoren, Wechselstromgeneratoren, Transformatoren, Statoren oder Rotoren.
